# EUROPEAN PATENT APPLICATION

(11) **EP 3 819 786 A1**
(43) Date of publication of application: **12.05.2021**
(21) Application number: 19207763.4
(22) Date of filing: 07.11.2019
(51) Int. Cl.: G06F 16/242, H04L 12/58, G05B 19/00, G06F 40/30

(54) **METHOD AND ARRANGEMENT FOR CONFIGURING AND/OR DISPLAYING INFORMATION OF A PUMP**

(71) Applicant: WILO SE, 44263 Dortmund (DE)
(72) Inventor: Oettmeier, Martin, 44263 Dortmund (DE); Grave, Sven, 44263 Dortmund (DE)
(74) Representative: Michalski Hüttermann & Partner Patentanwälte mbB

(57) **Abstract**

The invention relates to a computer-implemented method for configuring and/or displaying status information of a pump (1), comprising the steps of detecting, by a computer system (2), receipt of an input message in form of a plain language query message, a voice message and/or a graphical identification attribute of the pump (1) from a cloud-based conversation interface system (3), whereby the input message is routed by the cloud-based conversation interface system (3) from an instant messaging application installed on a smartphone (5) and/or by the smartphone (5), or of a status message, whereby the status message is routed by the smartphone (5) from the pump (1), analysing, by the computer system (2), the input message and/or the status message for determining a database query based on an analysed pump type, and retrieving, by the computer system (2), from the database in response to the database query at least one response message.

## Description

### Technical Field

The invention relates to a computer-implemented method for configuring and/or displaying status information of a pump. The invention further relates to a pump arrangement comprising a pump, a computer system, a smartphone with an instant messaging application installed thereon, and a cloud-based conversation interface system in communication with the computer system and the smartphone.

### Background Art

Pumps are known in the art and are generally used to move fluids such as liquids and gases by mechanical action. So called centrifugal pumps are used to transport fluids by the conversion of rotational kinetic energy to the hydrodynamic energy of the fluid flow. The rotational energy typically comes from an engine or electric motor. Common uses for centrifugal pumps include water, sewage, agriculture, petroleum and petrochemical pumping. Centrifugal pumps are often chosen for their high flow rate capabilities, abrasive solution compatibility, mixing potential, as well as their relatively simple engineering.

Modern pumps for commercial HVAC and drinking water applications provide application-guided settings using a setup guide on an LCD display and provide connectivity to mobile devices and pump networks for easy configuration and control. While present solutions enable a simple start-up configuration, changes during series production are not always that easy to implement. In particular older models not having electronic setup guides running on the pump are sometimes not easy to configure and/or to re-program.

### Summary of invention

Thus, it is an object of the invention to provide a method and a respective pump arrangement allowing an easy and intuitive configuration, and operation state information of a pump.

The object of the invention is solved by the features of the independent claims. Preferred embodiments are detailed in the dependent claims.

Thus, the object is solved by a computer-implemented method for configuring and/or displaying status information of a pump, comprising the steps of:
detecting, by a computer system, receipt of an input message in form of a plain language query message, a voice message and/or a graphical identification attribute of the pump from a cloud-based conversation interface system, whereby the input message is routed by the cloud-based conversation interface system from an instant messaging application installed on a smartphone and/or by the smartphone, or of a status message, whereby the status message is routed by the smartphone from the pump;
analysing, by the computer system, the input message and/or the status message for conformity and completeness and in case of affirmation for determining a database query based on an analysed pump type;
retrieving, by the computer system, from the database in response to the database query at least one response message; and
displaying, by the instant messaging application via the cloud-based conversation interface system, the at least one response message received from the cloud-based conversation interface system (3), whereby the at least one response message is routed from the computer system to the cloud-based conversation interface system.

According to a preferred implementation, the method comprises the further steps of:
detecting, by the computer system, at least one plain language answer and/or voice answer in response to the at least one response message from the cloud-based conversation interface system, whereby the at least one plain language answer and/or voice answer is routed by the cloud-based conversation interface system from the instant messaging application;
determining, by the computer system, based on an analysis of the at least of plain language answer and/or voice answer the at least one technical configuration parameter of the pump; and
providing, by the computer system, the at least one technical configuration parameter onto the smartphone for configuring the pump, whereby the at least one technical configuration parameter is routed by the computer system to the smartphone.

A key point of the invention is therefore that basically any pump can be simply configured or interpreted by an ordinary user, not requiring any deep knowledge of pumps and their configuration schemes. The pump therefore may not necessarily require any communication connection with the smartphone respectively the instant messaging application. In various prior art solutions users were required to install manufacture-specific configuration applications on smartphones in order to configure a pump. Thus, for configuring different types of pumps, a plurality of different applications was required, while users on the other side were reluctant to install even one of such configuration applications on their smartphone. In contrast thereto the proposed solution does not require installation of any manufacture-specific configuration application. Instead existing instant messaging applications such as for example WhatsApp or WeChat as nowadays broadly installed on smartphones can be used to configure an existing pump, such way providing fast and reliable help to a user of the pump and providing the user possible contact possibilities with a manufacturer of the pump as well as direct feedback from users to the manufacturer in respect to desired configurations of the pump. The method also allows for displaying information in respect to the pump, for example for curing an error, displaying explanation in respect to a non-obvious error code, displaying further information in respect to an error and the like.

The method is applicable to any kind of pumps, in particular to centrifugal pumps for example used for water, sewage, agriculture, petroleum and petrochemical pumping, a mixer and/or a booster. The pump may comprise an LCD display and respective buttons for configuring the pump, while the method can also be used with older pumps not equipped with such displays. The technical configuration parameter may comprise settings such as flow rate, speed and the like. Detecting receipt of the plain language query message may comprise detecting an input typed by a user into the instant messaging application, such as chatting with another user. The voice message can be recorded by the instant messaging application and/or recorded by the smart phone and provided to the instant messaging application. The voice message may comprise an audio format such as mp3 or the like. The voice message may comprise textual information of the user and/or sound of the pump. The further pump information may comprise a picture, a graphical instruction or the like. The graphical identification attribute of the pump may comprise a picture of the pump, a QR code of the pump and/or any other code characterizing the pump taken by the user and/or uploaded onto the instant messaging application, such as sending the picture to another user. Routing means preferably that for example the graphical identification attribute is submitted from the instant messaging application to the cloud-based conversation interface system for example by wireless communication over a wireless network and/or via the Internet. Alternatively, or in addition the status message, such as for example a serial number and/or type number of the pump can be detected by the smartphone from the pump. The smartphone can be provided as a tablet or any other portable electronic means.

Analysis of the plain language query message, the voice message and/or of the graphical identification attribute of the pump and/or of the status message can for example be conducted by parsing the plain language query message, the voice message and/or by picture analysis using a respective software, in order to determining the database query based on the so analysed pump type. The status message may comprise a pump type parameter i.e. a parameter related to the type of the pump. The response message may comprise a plain language reply message, a voice reply message and/or a graphical representation including further pump information and/or relating to at least one application parameter of a building, a clear and/or waste water pump being different to at least one technical configuration parameter of the pump. Analysing for conformity and completeness may comprise steps such as checking if received data fits to expected data, eliminating errors in the received data due to transmission and/or user error, such as transmission noise impacting data quality and/or wrongly entered data. Analysing for conformity and completeness may comprise using machine learning and/or artificial intelligence for improving data quality. In response to the database query, the database outputs the at least one application parameter such as for example number of floors, possible energy reduction and the like. Such way the at least one application parameter is not identical to the at least one technical configuration parameter. The pump preferably comprises a control electronic which allows for receiving and/or communicating with the smartphone.

The at least one application parameter is basically 'translated' into the at least one plain language reply message, voice reply message and/or the graphical representation relating, to be displayed for example on a display of the smartphone by the instant messaging application or to be played by the smartphone to a user, once submitted from the computer system to the cloud-based conversation interface system and subsequently to the smartphone. The plain language reply message, voice reply message and/or the graphical representation relating is preferably generated by the computer for example as mp3 file in case of the voice reply message. A response thereto is detected by the computer system, once received from the smartphone and submitted via the cloud-based conversation interface system to the computer system. Said features respectively steps can be repeated until all plain language reply messages, voice reply messages and/or graphical representations are answered. Based on the analysis of said response, the computer system determines the at least one technical configuration parameter of the pump, for example by consulting the database comprising respective configurations for the pump, and finally submits the at least one technical configuration parameter to the smart phone for configuring the pump. The plain language reply message, voice reply message and/or the graphical representation may comprise information in respect to the pump, for example for curing an error, displaying explanation in respect to a non-obvious error code, displaying further information in respect to an error and the like.

In a preferred implementation the method comprises the step of capturing, by the instant messaging application and/or the smartphone, a graphical identification attribute of the pump. The smartphone therefore preferably comprises a camera for capturing the graphical identification attribute, which can then be submitted via the instant messaging application to the computer system.

According to another preferred implementation, the method comprises the step of retrieving, by the instant messaging application and/or the smartphone, at least one status information of the pump, whereby the at least one status information is routed to the computer system. The status information may comprise an error message, an error code, a serial number, a type of the pump, an actual configuration or the like. The status information may be retrieved during a communication connection between the smartphone and the pump, as described below, and/or by capturing, for example, a screenshot of a display of the pump showing actual status and/configuration parameters of the pump.

In a further preferred implementation, the method comprises the step of configuring, by the smartphone, the pump with the at least one technical configuration parameter. More preferably, a plurality of pumps is configured with the at least one technical configuration parameter in parallel or in series. Preferably, the at least one technical configuration parameter is submitted from the smartphone to the pump during a communication connection, as described below. Such way the smartphone can be used, instead of any sophisticated computer hardware, to configure the pump with the at least one technical configuration parameter, thereby allowing an ordinary user to configure the pump without necessarily having deep technical knowledge of the pump and its configuration scheme.

According to another preferred implementation, the method comprises the step of establishing, by the smartphone, a communication connection, in particular a wireless communication connection, between the smartphone and the pump prior to or after configuring. The communication connection may be established via a wireless UMTS, LTE and/or wireless LAN connection and/or via a wired connection, for example by plugging a cable connected to the smartphone into the pump.

In a further preferred implementation, the method comprises the step of providing, by the instant messaging application, the at least one technical configuration parameter as a customized configuration manual, as a configuration hyperlink and/or by displaying on the smartphone. Such way the at least one technical configuration parameter, which may comprise various, different technical configuration parameters such as for example speed, pressure, flow rate or the like, can be provided in a file format including for example text and images such as a customized PDF, portable document format, file to be downloaded and/or shown on a display of the smartphone. Alternatively, or in addition the customized configuration manual, which preferably comprises all necessary settings and/or steps for configuring the pump, can be provided for example as customized webpage linked via the hyperlink. The customized configuration manual may comprise animated graphics thus allowing a very intuitive and easy configuring of the pump, tailored for ordinary users and not only experts such way allowing a very easy and to the specific use-case configuring.

According to another preferred implementation, the cloud-based conversation interface system is configured as chat-bot communicating via the instant messaging application. Such chat-bot can be provided as software-routine running on the cloud-based conversation interface system that conducts a conversation with the user via auditory or textual methods. The chat-bot may use accustomed texting dialogues tailored to different types of pumps and/or may comprise rapid input processing means for analysing and responding to speech. The chat-bot is preferably designed to convincingly simulate how a human would behave as a conversational partner. The chat-bot may comprise natural language processing thus allowing analysis and response not only via plain-text but also via language messages. Such way the chat-bot may respond to voice queries, to textual queries may provide audio responses and/or may provide textual responses.

In a further preferred implementation, the pump comprises at least one sensor configured for measuring an effect of the at least one technical configuration parameter being configured onto the pump. The sensor can be provided for example as pressure sensor, as speed sensor, as flow rate sensor or the like. The sensor may be integrated within the pump and/or attached to the pump. An output of the sensor can be preferably transmitted to the smartphone and/or to the instant messaging application, and further preferably to the computer system.

According to another preferred implementation, the method comprises the step of updating by the instant messaging application, the computer system and/or the smartphone, the database according to the at least one plain language answer by using an artificial machine engine. Such way the database can be updated to provide improved plain language reply messages and/or graphical representations, in order to optimize the configuration of the pump, for example based on feedback received from the sensor described before.

In a further preferred implementation, the method comprises the step of displaying, by the instant messaging application via the cloud-based conversation interface system a selection of configuration alternatives for the pump, whereby the selection of configuration alternatives is routed from the computer system to the cloud-based conversation interface system. The user may choose one of the configuration alternatives for example according to personal preferences which is then used for configuring the pump. Such configuration alternatives can be displayed on a display of the smartphone and such wise chosen by scrolling and clicking the alternatives.

The object of the invention is further solved by a pump arrangement comprising a pump, a computer system, a smartphone with an instant messaging application installed thereon, and a cloud-based conversation interface system in communication with the computer system and the smartphone, whereby
the computer system is configured for detecting receipt of an input message in form of a plain language query message, a voice message and/or a graphical identification attribute of the pump from a cloud-based conversation interface system, whereby the input message is routed by the cloud-based conversation interface system from an instant messaging application installed on a smartphone and/or by the smartphone, or of a status message, whereby the status message is routed by the smartphone from the pump;
the computer system is further configured for analysing the input message and/or the status message for conformity and completeness and in case of affirmation for determining a database query based on an analysed pump type;
the computer system is further configured for retrieving from the database in response to the database query at least one response message; and
the instant messaging application is configured for displaying the at least one plain language response message received from the cloud-based conversation interface system, whereby the at least one response message is routed from the computer system to the cloud-based conversation interface system.

In a further preferred implementation the computer system is further configured for detecting at least one plain language answer and/or voice answer in response to the at least one response message from the cloud-based conversation interface system, whereby the at least one plain language answer and/or voice answer is routed by the cloud-based conversation interface system from the instant messaging application;
the computer system is further configured for determining based on an analysis of the at least of plain language answer and/or voice answer the at least one technical configuration parameter of the pump; and
the computer system is further configured for providing the at least one technical configuration parameter onto the smartphone for configuring the pump, whereby the at least one technical configuration parameter is routed by the computer system to the smartphone.

The proposed arrangement allows use of existing instant messaging applications such as for example WhatsApp or WeChat broadly installed nowadays on smartphones to configure an existing pump, such way providing a user fast and reliable help, possible contact possibilities with a manufacturer of the pump as well as direct feedback from users to the manufacturer in respect to desired configurations.

In a further preferred implementation the instant messaging application and/or the smartphone is configured for capturing a graphical identification attribute of the pump, configured for retrieving the at least one status information of the pump, whereby the at least one status information is routed to the computer system and/or configured for providing the at least one technical configuration parameter as a customized configuration manual, as a configuration hyperlink and/or by displaying on the smartphone.

According to a further preferred implementation the smartphone is configured for configuring the pump with the at least one technical configuration parameter and/or configured for establishing a communication connection, in particular a wireless communication connection, between the smartphone and the pump prior to or after configuring. In another preferred implementation the cloud-based conversation interface system is configured as chat-bot communicating via the instant messaging application. According to a further preferred implementation the pump comprises at least one sensor configured for measuring an effect of the at least one technical configuration parameter being configured onto the pump.

Further embodiments and advantages of the arrangement are directly and unambiguously derived by the person skilled in the art from the method as described before.

### Brief description of drawings

These and other aspects of the invention will be apparent from and elucidated with reference to the embodiment described hereinafter.

In the drawings:
Fig. 1 shows a pump arrangement according to a preferred embodiment in a schematic view,
Fig. 2 shows a first screenshot of an instant messaging application of the arrangement according to the preferred embodiment,
Fig. 3 shows a second screenshot of the instant messaging application of the arrangement according to the preferred embodiment,
Fig. 4 shows a third screenshot of the instant messaging application of the arrangement according to the preferred embodiment,
Fig. 5 shows a fourth screenshot of the instant messaging application of the arrangement according to the preferred embodiment, and
Fig. 6 shows a fifth screenshot of the instant messaging application of the arrangement according to the preferred embodiment.

### Description of embodiments

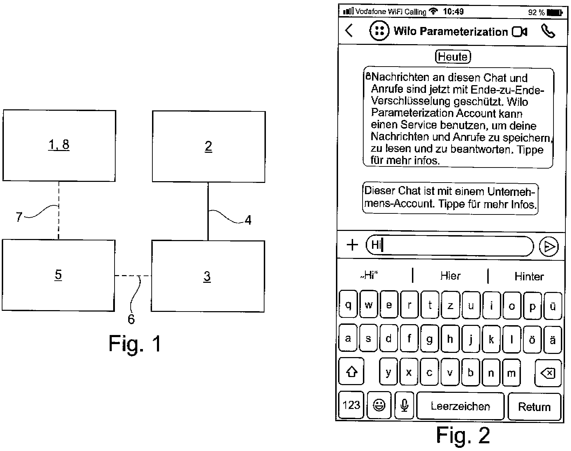

Fig. 1 shows a pump arrangement according to a preferred embodiment in a schematic view. The pump arrangement comprises a pump 1 usable for hot-water heating systems of all kinds, air-conditioning systems, closed cooling circuits, industrial circulation systems and provided as centrifugal pump. The pump 1 is configurable by at least one technical configuration parameter such as speed, volume flow and the like. Alternatively, the pump 1 shall not be configured by a technical configuration parameter. In such case the method described in the following allows for determining an error and for displaying respective information for curing the error. The pump 1 comprises a display, not depicted, or may be provided without a display, and comprises respective input buttons for altering and/or entering the technical configuration parameters. A microprocessor of the pump 1 allows for executing various preprogrammed control modes, which are selectable via the input buttons, and/or for communicating with other devices of the arrangement, for example via a Bluetooth and/or NFC, near field communication, connection. The display may be provided as touch-display for altering and/or entering the technical configuration parameters.

The arrangement further comprises a computer system 2, for example installed in a data centre, and a cloud-based conversation interface system 3 in communication with the computer system 2. The could-based conversation interface system 3 can be installed on the computer system 2 or distant thereto on a separate server in a separate date centre connected via a computer network 4 and/or the Internet to the computer system 2. The could-based conversation interface system 3 can be installed on a cloud platform publicity accessible via the Internet so that a smartphone 5 having an instant messaging application installed thereon can communicate with the could-based conversation interface system 3 via an UMTS, LTE and/or wireless LAN connection, indicated with dashed line 6. The instant messaging application may be provided as any suitable instant messaging application that facilitates instant message communication between multiple parties, such as WhatsApp, Telegram, Slack, Cortana, Echo etc. Such way the could-based conversation interface system 3 comprises a chat interface component such as a chat-bot and is configured to communicate via the instant messaging application i.e. to receive and send messages to a user of the instant messaging application respectively of the smartphone.

In a first step the user enters an input message in form of a plain language query message into or records a voice message with the instant messaging application on the smartphone 5 in a similar manner as used to submit instant messages to other users of the chat application, see Fig. 2, and/or takes a picture of the pump 1 as graphical identification attribute of the pump 1, which is then routed by the instant messaging application to the cloud-based conversation interface system 3 and/or by the smartphone 5 to the computer system 2, in order to start a configuration activity. Alternatively, or in addition a status message such as a serial number of the pump 1 is routed by the smartphone 5 to the computer system 2. The computer system 2 detects receipt of the plain language query message, of the voice message and/or of the graphical identification attribute of the pump 1 from the cloud-based conversation interface system 3 respectively from the smartphone 5. The plain language query message and/or the voice message may comprise a request for configuring the pump 1 or providing detailed information about error codes of the pump 1.

In a next step, the computer system 2 analyses the plain language query message, the voice message and/or the graphical identification attribute of the pump 1 and/or the status message to for checking conformity and completeness and in case of affirmation to determine a database query based on an analysed pump type. A translation component therefore installed on the computer system 2 parses the plain language content of the message or the voice message in order to determine the nature of the request or command represented by the message. The translation component identifies and extracts keywords or contextual information from the message that can be used to determine information being requested or a command being issued.

For example, an incoming message requesting information regarding a configuration of the pump 1 may first trigger a parametrisation routine stored on the computer system 2 and thus may simply read "Hi" as incoming message, see Fig. 2, for confirming start of such parametrisation respectively of the configuration activity. Upon detecting said message the translation component understands that the parametrisation routine is requested and thus presents a response via the instant messaging application to user allowing the user to select a product type of the pump such as "SiBoost, Rexa, Pico". Step 1 is repeated and the user enters "SiBoost" as plain language query message respectively as status message, or alternatively responds with the voice message. Based on said analysed status message the computer system 2 determines a database query.

In response to the database query, in a next step, the computer system 2 determines from the database at least one response message in form of a plain language reply message, voice reply message and/or graphical representation relating to at least one application parameter of a building, a clear and/or waste water pump being different to the at least one technical configuration parameter. The at least one plain language reply message, voice reply message and/or the graphical representation is then routed from the computer system 2 to the cloud-based conversation interface system 3 and subsequently displayed by the instant messaging application.

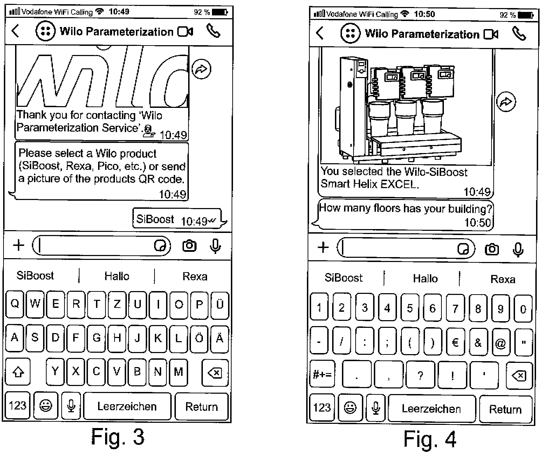

Following the example above and referring to Fig. 4, the instant messaging application shows a picture of the selected pump 1 "SiBoost" received from the database as graphical representation and outputs as plain language reply message "How many floors has your building?" as application parameter related to the building where the pump 1 is installed. In a further step a plain language answer in response to the at least one plain language reply message, voice reply message and/or graphical representation is routed by the cloud-based conversation interface system 3 from the instant messaging application to the computer system 2 and such wise detected.

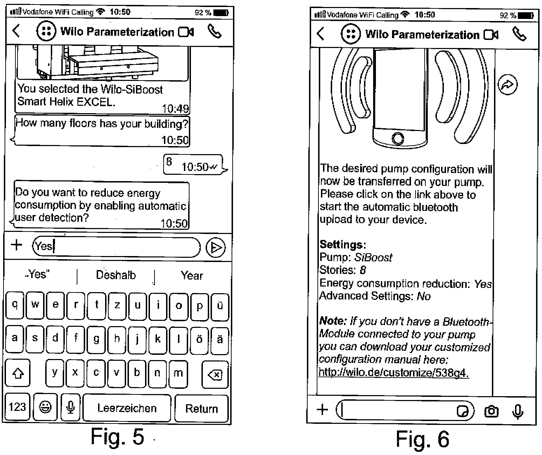

Again, following the example above, in regard to Fig. 5, the plain language answer "8" in response to the plain language reply message is routed to the computer system 2. Said steps are repeated i.e. another plain language reply message "Do you want to reduce energy consumption by enabling automatic user detection?" is displayed by the instant messaging application and the response "Yes" typed by the user is routed to the computer system 2.

In a next step the computer system 2 determines based on an analysis of the plain language answers the at least one technical configuration parameter of the pump 1 from the database and provides the at least one technical configuration parameter onto the smartphone for configuring the pump, whereby the at least one technical configuration parameter is routed by the computer system to the smartphone.

In respect to Fig. 6 following the example above, the at least one technical configuration parameter can be for example speed, volume flow and the like of the pump 1. The at least one technical configuration parameter can be presented to the user via a download link as a customized instruction manual, for example as a PDF file to be downloaded onto the smartphone 5 and shown to the user via a display of the smartphone 5. Alternatively or in parallel, if the pump 1 can communicate with the smartphone 5 via Bluetooth, NFC or any other communication protocol by such wireless communication connection, indicated by dashed line 7, the pump 1, or a plurality of pumps 1 in parallel, can be configured with said at least one technical configuration parameter transferred via the wireless communication connection by the smartphone 5. Such communication connection also allows for retrieving at least one status information of the pump 1 by the instant messaging application and/or the smartphone 5, which is then routed to the computer system 2 for determining the least one technical configuration parameter.

The pump 1 comprises a sensor 8, which is configured for measuring an effect of the at least one technical configuration parameter being configured onto the pump 1. Such way it can be determined if the configured technical configuration parameter provides an expected effect such as an increased speed of the pump 1. Further, the database can be updated via the instant messaging application, the computer system 2 and/or the smartphone 5 according to the at least one plain language answer by using an artificial machine engine installed on the computer system 2.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: pump
- 2: computer system
- 3: cloud-based conversation interface system
- 4: network
- 5: smartphone
- 6: wireless connection
- 7: wireless connection
- 8: sensor

## Claims

**1.** Computer-implemented method for configuring and/or displaying status information of a pump (1), comprising the steps of:
detecting, by a computer system (2), receipt of an input message in form of a plain language query message, a voice message and/or a graphical identification attribute of the pump (1) from a cloud-based conversation interface system (3), whereby the input message is routed by the cloud-based conversation interface system (3) from an instant messaging application installed on a smartphone (5) and/or by the smartphone (5), or of a status message, whereby the status message is routed by the smartphone (5) from the pump (1);
analysing, by the computer system (2), the input message and/or the status message for conformity and completeness and in case of affirmation for determining a database query based on the analysis;
retrieving, by the computer system (2), from the database in response to the database query at least one response message; and
displaying, by the instant messaging application via the cloud-based conversation interface system (3), the at least one response message received from the cloud-based conversation interface system (3), whereby the at least one response message is routed from the computer system (2) to the cloud-based conversation interface system (3).

**2.** Method according to the previous claim, comprising the steps of:
detecting, by the computer system (2), at least one plain language answer and/or voice answer in response to the at least one response message from the cloud-based conversation interface system (3), whereby the at least one plain language answer and/or voice answer is routed by the cloud-based conversation interface system (3) from the instant messaging application;
determining, by the computer system (2), based on an analysis of the at least of plain language answer and/or voice answer the at least one technical configuration parameter of the pump (1); and
providing, by the computer system (2), the at least one technical configuration parameter onto the smartphone (5) for configuring the pump (1), whereby the at least one technical configuration parameter is routed by the computer system (2) to the smartphone (5).

**3.** Method according to any of the previous claims, comprising the step of:
capturing, by the instant messaging application and/or the smartphone (5), a graphical identification attribute of the pump (1), and/or
retrieving, by the instant messaging application and/or the smartphone (5), the at least one status information of the pump (1), whereby the at least one status information is routed to the computer system (2).

**4.** Method according to any of the two previous claims, comprising the step of:
configuring, by the smartphone (5), the pump (1) with the at least one technical configuration parameter.

**5.** Method according to the previous claim, comprising the step of:
establishing, by the smartphone (5), a communication connection, in particular a wireless communication connection (7), between the smartphone (5) and the pump (1) prior to or after configuring.

**6.** Method according to any of the four previous claims, comprising the step:
Providing, by the instant messaging application, the at least one technical configuration parameter as a customized configuration manual, as a configuration hyperlink and/or by displaying on the smartphone (5).

**7.** Method according to any of the previous claims, whereby the cloud-based conversation interface system (3) is configured as chat-bot communicating via the instant messaging application.

**8.** Method according to any of the six previous claims, whereby the pump (1) comprises at least one sensor (8) configured for measuring an effect of the at least one technical configuration parameter being configured onto the pump (1).

**9.** Method according to any of the previous claims, comprising the step of:
Updating by the instant messaging application, the computer system (2) and/or the smartphone (5), the database according to the at least one plain language answer by using an artificial machine engine.

**10.** Method according to any of the previous claims, comprising the step of:
displaying, by the instant messaging application via the cloud-based conversation interface system (3) a selection of configuration alternatives for the pump (1), whereby the selection of configuration alternatives is routed from the computer system (2) to the cloud-based conversation interface system (3).

**11.** Pump arrangement comprising a pump (1), a computer system (2), a smartphone (5) with an instant messaging application installed thereon, and a cloud-based conversation interface system (3) in communication with the computer system (2) and the smartphone (5), whereby
the computer system (2) is configured for detecting receipt of an input message in form of a plain language query message, a voice message and/or a graphical identification attribute of the pump (1) from the cloud-based conversation interface system (3), whereby the input message is routed by the cloud-based conversation interface system (3) from an instant messaging application installed on a smartphone (5) and/or by the smartphone (5), or of a status message, whereby the status message is routed by the smartphone (5) from the pump (1);
the computer system (2) is further configured for analysing input message and/or the status message for conformity and completeness and in case of affirmation for determining a database query based on an analysed pump type;
the computer system (2) is further configured for retrieving from the database in response to the database query at least one response message; and
the instant messaging application is configured for displaying the at least one response message received from the cloud-based conversation interface system (3), whereby the at least one response message is routed from the computer system (2) to the cloud-based conversation interface system (3).

**13.** Arrangement according to the previous arrangement claim, whereby
the computer system (2) is further configured for detecting at least one plain language answer and/or voice answer in response to the at least one response message from the cloud-based conversation interface system (3), whereby the at least one plain language answer and/or voice answer is routed by the cloud-based conversation interface system (3) from the instant messaging application;
the computer system (2) is further configured for determining based on an analysis of the at least of plain language answer and/or voice answer the at least one technical configuration parameter of the pump (1); and
the computer system (2) is further configured for providing the at least one technical configuration parameter onto the smartphone (5) for configuring the pump (1), whereby the at least one technical configuration parameter is routed by the computer system (2) to the smartphone (5).

**13.** Arrangement according to the previous arrangement claim, whereby the instant messaging application and/or the smartphone (5) is configured for capturing a graphical identification attribute of the pump (1), configured for retrieving the at least one status information of the pump (1), whereby the at least one status information is routed to the computer system (2) and/or configured for providing the at least one technical configuration parameter as a customized configuration manual, as a configuration hyperlink and/or by displaying on the smartphone (5).

**14.** Arrangement according to any of the two previous arrangement claims, whereby the smartphone (5) is configured for configuring the pump (1) with the at least one technical configuration parameter and/or configured for establishing a communication connection, in particular a wireless communication connection, between the smartphone (5) and the pump (1) prior to or after configuring.

**15.** Arrangement according to any of the three previous arrangement claims, whereby the cloud-based conversation interface system (3) is configured as chat-bot communicating via the instant messaging application, and/or whereby the pump (1) comprises at least one sensor configured for measuring an effect of the at least one technical configuration parameter being configured onto the pump (1).
